# FASCICULE DE BREVET EUROPEEN

(11) **EP 3 478 216 B1**
(45) Date de publication et mention de la délivrance du brevet: **13.04.2022**
(21) Numéro de dépôt: 17735489.1
(22) Date de dépôt: 03.07.2017
(51) Int. Cl.: A61C 8/00

(54) **EMBASE DE PILIER POUR UNE RESTAURATION DENTAIRE**
ABUTMENT FÜR DIE RESTAURATIVE ZAHNMEDIZIN
ABUTMENT BASE FOR A RESTORATIVE DENTISTRY

(30) Priorité: 04.07.2016 FR 1656374
(43) Date de publication de la demande: 08.05.2019
(73) Titulaire: Euroteknika, 74700 Sallanches (FR)
(72) Inventeur: LANCIEUX, Cédric, 74120 Megève (FR); CALVAT, Benjamin, 73400 Ugine (FR); PERROLLAZ, Fabien, 74300 Magland (FR); LEGER, Théo, 74700 Domancy (FR)
(74) Mandataire: Novaimo
(86) Numéro de dépôt international: PCT/EP2017/066497
(87) Numéro de publication internationale: WO 2018/007316

(56) Documents cités:
- WO-A1-2013/004387
- WO-A2-2014/012973
- DE-A1-102013 013 565
- FR-A1- 3 027 792
- US-A1- 2014 141 387

## Description

La présente invention se rapporte à une embase de pilier pour une restauration dentaire. Une restauration dentaire permet de réaliser une dentition artificielle à un patient partiellement ou totalement édenté. Une méthode de l'état de la technique repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'une embase de pilier de restauration sur l'implant, sur laquelle est fixée une prothèse dentaire.

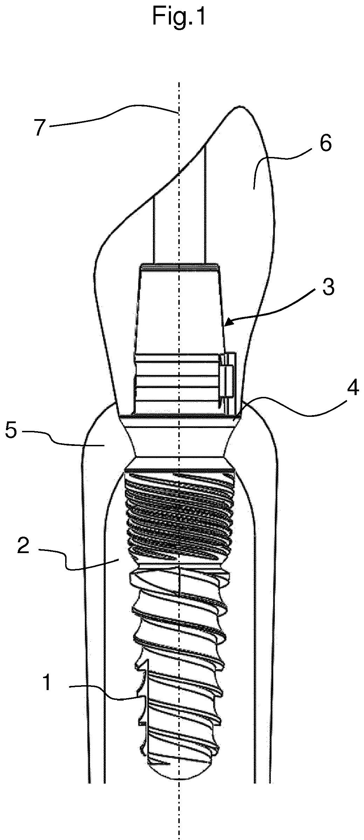

La figure 1 représente un ensemble de restauration dentaire utilisé dans l'état de la technique. Un implant 1 est solidarisé à la partie osseuse 2, une embase de pilier 3 est fixée sur l'implant 1, de sorte que sa collerette 4 se trouve positionnée au niveau de la frontière entre la partie osseuse 2 et la gencive 5. Enfin, une prothèse 6 est fixée sur l'embase de pilier 3. En remarque, dans cet ensemble selon l'état de la technique, l'embase de pilier 3 et la prothèse 6 sont alignés avec l'implant 1 ; ce dernier doit donc être positionné selon l'axe 7 défini par la dentition à restaurer, c'est-à-dire l'axe de la prothèse 6. Cette approche présente l'inconvénient du manque de flexibilité du positionnement de l'implant dans la structure osseuse. Si cette dernière est insuffisante au niveau de l'emplacement imposé pour l'implant, il faut procéder à une greffe osseuse préalable, ce qui induit une lourdeur chirurgicale supplémentaire, préjudiciable au patient.

D'autres solutions de l'état de la technique nécessitent la fixation d'une prothèse en bouche, c'est-à-dire consistant à réaliser un collage directement en bouche sur une embase de pilier au préalable vissée sur un implant. Une telle approche présente l'inconvénient induit par la manipulation de la colle utilisée à cet effet directement en bouche, qui entraine le risque de rejet de colle nocive dans la bouche du patient et la difficulté à retirer le surplus sous la gencive.

Le document WO 2014/012973 A2 décrit une embase de pilier selon le préambule de la revendication 1.

Ainsi, un objet général de l'invention consiste en une solution de restauration dentaire qui ne comprend pas tout ou partie des inconvénients de l'état de la technique.

Plus précisément, un premier objet de l'invention est une solution de restauration dentaire plus simple et moins traumatisante pour le patient, limitant notamment le recours aux greffes osseuses et les collages pratiqués directement dans la bouche du patient.

Un second objet de l'invention est une solution de restauration dentaire permettant d'atteindre un aspect esthétique optimal.

A cet effet, l'invention repose sur un embase de pilier comprenant une partie implantaire orientée autour d'un premier axe, adaptée à une fixation sur un implant dentaire, et une partie coronaire orientée autour d'un second axe, adaptée pour la fixation d'une prothèse dentaire, et une collerette séparant lesdites partie implantaire et partie coronaire, les deux axes respectivement de la partie implantaire et de la partie coronaire n'étant pas alignés et formant un angle de l'embase angulée, l'embase de pilier comprenant une ouverture centrale s'étendant sur toute sa longueur, adaptée pour le passage d'un outil comme un tournevis, dont l'entrée est sensiblement orientée dans la direction du second axe au niveau d'une extrémité de la partie coronaire et la sortie partielle sensiblement orientée dans la direction du premier axe au niveau de la partie implantaire, pour un vissage dans un implant, l'embase de pilier comprenant une troncature pratiquée dans la paroi de la partie coronaire, pour permettre le passage d'une vis au niveau d'une portion non rectiligne de l'ouverture centrale de l'embase de pilier, la troncature augmentant la dimension de l'entrée dans l'ouverture centrale ou la troncature s'étendant depuis l'extrémité de la partie coronaire sur environ la moitié de la hauteur de la partie coronaire, cette troncature étant agencée au niveau du côté ouvert de l'angle de l'embase angulée, caractérisé en ce que ce côté ouvert se situe au niveau de l'épaisseur la plus importante de ladite collerette

L'embase de pilier peut comprendre un élément de guidage et de maintien en position, de type ergot, agencé sur la surface extérieure de la partie coronaire.

L'embase de pilier peut comprendre un élément de clippage, comme une gorge, agencé sur la surface extérieure de la partie coronaire, pour le clippage d'un capuchon de cicatrisation.

L'embase de pilier peut comprendre au moins une gorge de rétention de colle sur la surface extérieure de la partie coronaire.

La partie coronaire peut présenter au moins une partie de forme tronconique et/ou cylindrique agencée autour du second axe.

L'angle α formé entre les deux axes respectivement de la partie implantaire et de la partie coronaire peut être compris entre 5 et 30 degrés.

L'ouverture centrale peut être sensiblement symétriquement agencée autour du second axe de la partie coronaire, au moins au niveau de l'extrémité de la partie coronaire, et sensiblement symétriquement agencée autour du premier axe de la partie implantaire au niveau d'un dispositif de connexion avec un implant, agencé à l'extrémité de la partie implantaire de l'embase de pilier.

L'embase de pilier peut se présenter sous une forme monobloc.

Selon un concrétisation de l'invention, un ensemble de restauration comprenant une prothèse, éventuellement un capuchon de cicatrisation, est fixée sur une embase de pilier telle que décrite précédemment.

L'embase de pilier de l'invention est utilisée dans un procédé de restauration dentaire, comprenant les étapes suivantes :
- fixation d'une prothèse sur une embase de pilier angulée telle que décrite ci-dessus ; puis
- Vissage en bouche de l'ensemble obtenu sur un implant à l'aide d'une vis, par le passage d'un outil, notamment un tournevis, au travers une ouverture de la prothèse et une ouverture centrale de l'embase de pilier, de sorte à atteindre la vis logée dans l'ouverture centrale de l'embase de pilier et à permettre son vissage dans l'implant, l'ouverture de la prothèse étant positionnée sur une face linguale non visible.

Le procédé de restauration dentaire peut comprendre une étape préalable d'insertion d'une vis au sein de l'ouverture centrale de l'embase de pilier avant le collage de la prothèse sur l'embase de pilier.

L'étendue de la présente invention est définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente un ensemble de restauration dentaire selon un état de la technique.
Les figures 2 et 3 représentent des vues en perspective d'une embase de pilier selon un mode de réalisation de l'invention.
La figure 4 représente une vue de côté de l'embase de pilier selon le mode de réalisation de l'invention.
La figure 5 représente un ensemble pour restauration dentaire utilisant une embase de pilier selon le mode de réalisation de l'invention.
La figure 6 illustre une variante d'ensemble pour restauration dentaire utilisant une embase de pilier selon le mode de réalisation de l'invention.
La figure 7 illustre le fait qu'un ensemble pour restauration dentaire de l'état de la technique ne serait pas adapté à une restauration dentaire telle qu'envisagée par les figures 5 et 6.
La figure 8 représente une étape d'un procédé de restauration dentaire utilisant une embase de pilier selon le mode de réalisation de l'invention.
La figure 9 représente un détail de l'ensemble pour restauration dentaire utilisant une embase de pilier selon le mode de réalisation de l'invention.

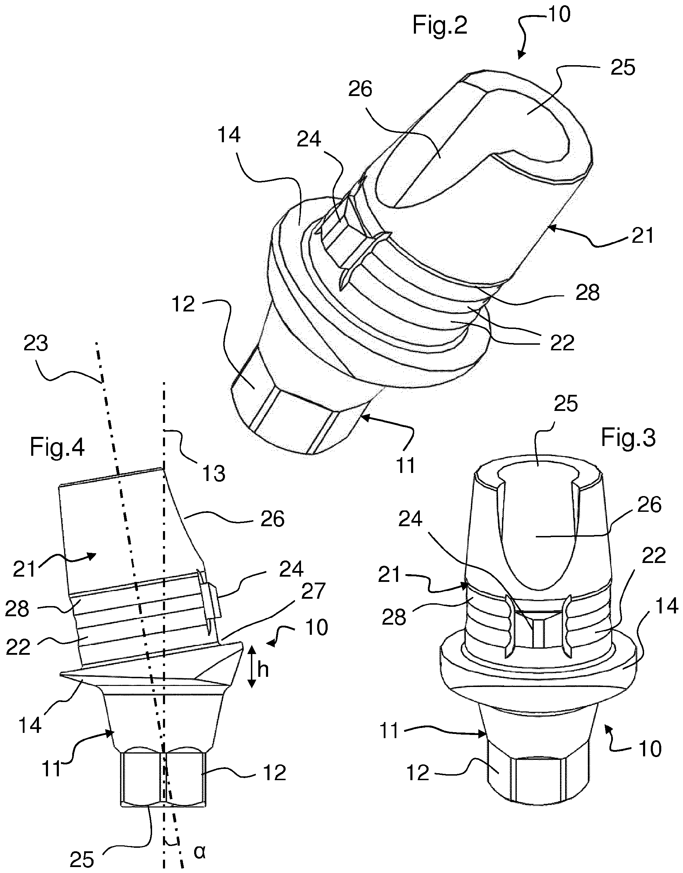

Selon le mode de réalisation de l'invention qui va être décrit, une restauration dentaire utilise un composant intermédiaire que nous appellerons embase de pilier 10, qui est parfois appelé simplement pilier ou T-base ou Esthétibase. L'embase de pilier 10, particulièrement représentée sur les figures 2 à 4, comprend deux parties principales, séparées par une collerette 14.

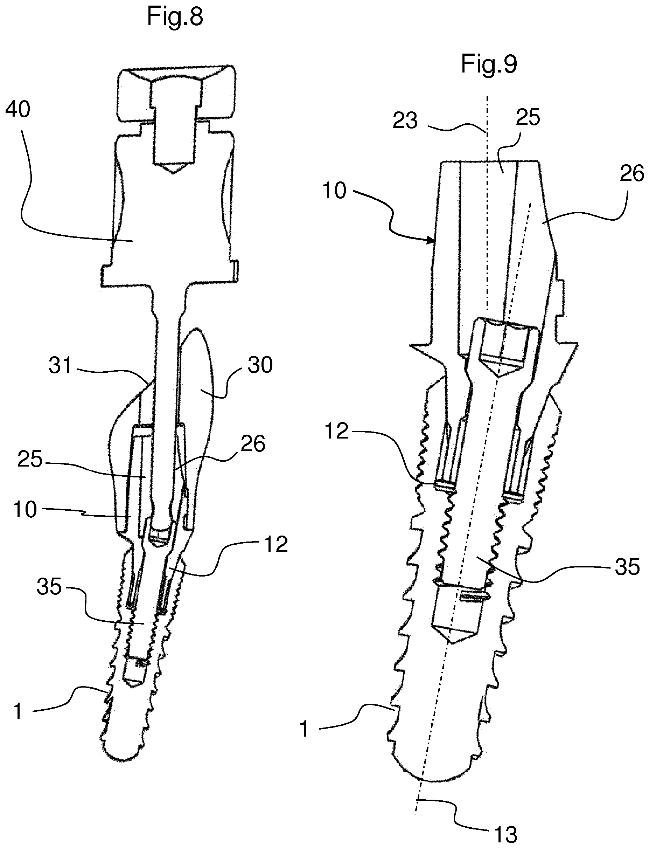

Une première partie implantaire 11 comprend un dispositif de connexion 12 avec un implant, agencé vers la première extrémité de l'embase de pilier 10. Ce dispositif de connexion 12 est orienté selon un premier axe 13, mis en évidence sur la figure 4, destiné à un alignement avec l'axe d'un implant lors de la connexion de l'embase de pilier 10 sur cet implant, comme cela est visible sur la figure 9 par exemple. Dans le mode de réalisation décrit, le dispositif de connexion 12 se présente sous la forme d'une partie de section hexagonale agencée symétriquement autour du premier axe 13. En variante, toute autre forme, standardisée ou non, pourrait être utilisée pour ce dispositif de connexion 12.

L'embase de pilier 10 comprend de plus une seconde partie coronaire 21, destinée à recevoir une prothèse dentaire. Selon le mode de réalisation, cette partie coronaire 21 comprend d'abord une sous-partie de forme sensiblement tronconique puis une sous-partie sensiblement cylindrique, s'étendant jusqu'à la collerette 14. Ces deux sous-parties sont alignées, coaxiales. Elles sont agencées autour d'un second axe 23, visible sur la figure 4.

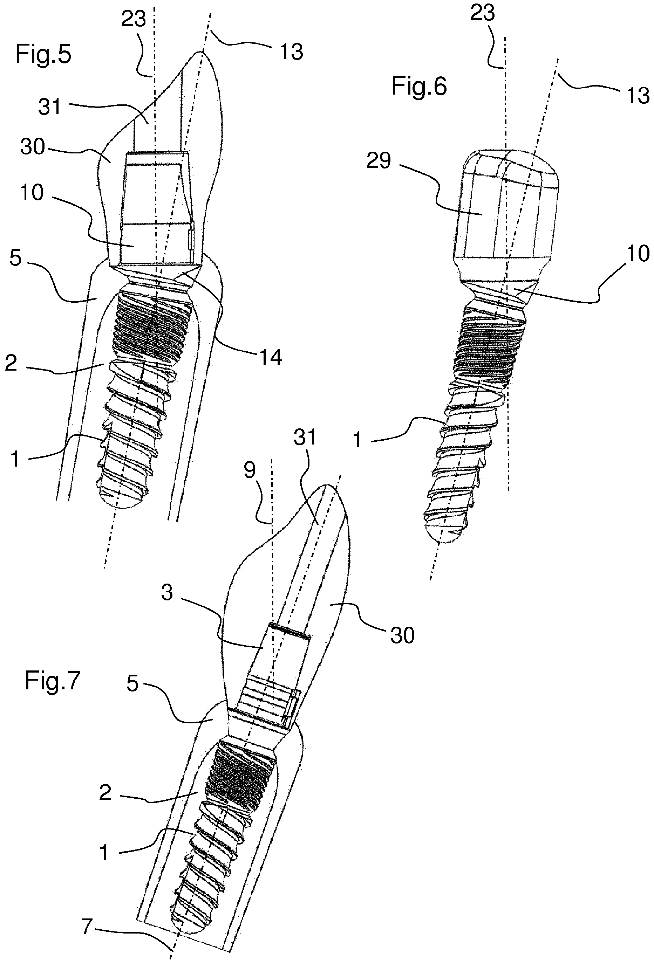

La surface extérieure de la partie coronaire 21 est destinée à recevoir le collage d'une prothèse dentaire, comme cela sera détaillé par la suite. Pour cela, cette surface extérieure comprend, au moins sur une partie de sa surface, des gorges 22 de rétention de colle. Elle comprend de plus une première gorge qui remplit la fonction d'élément de clippage 28 d'un composant comme un capuchon de cicatrisation, qui sera décrit en référence avec la figure 6. Elle comprend de plus un ergot 24 de positionnement d'une prothèse dentaire, évitant sa mauvaise orientation autour de cette partie coronaire 21. Cet ergot 24 remplit donc la fonction d'élément de guidage, pour un bon positionnement, et de maintien en position, d'élément anti-rotationnel, d'un capuchon et/ou d'une prothèse dentaire : en variante, l'ergot 24 peut se présenter sous toute autre forme remplissant les mêmes fonctions. Enfin, cette seconde partie coronaire 21 présente une ouverture centrale 25, s'étendant continument jusqu'à l'extrémité du dispositif de connexion 12 de la partie implantaire 11, destinée au passage d'une vis de fixation de l'embase de pilier 10 sur un implant. Cette ouverture 25 s'étend donc sur toute la longueur de l'embase de pilier 10.

La partie coronaire 21 s'étend selon un second axe 23. Ce second axe 23 n'est pas aligné avec le premier axe 13 de la partie implantaire 11. En effet, les deux axes présentent un angle α ; cette spécificité rend l'embase de pilier 10 angulée. De préférence, l'angle α est compris entre 5 et 30 degrés inclus. Ainsi, l'ouverture centrale 25 s'étend donc sur toute la longueur de l'embase de piler 10, selon la direction du premier axe 13 dans la partie implantaire 11 et selon la direction du second axe 23 dans la partie coronaire 21. Elle présente donc une portion non rectiligne, par exemple un coude ou une portion courbée, au niveau de la collerette 14, pour former un changement de direction d'angle α correspondant à l'angle entre les deux axes 13, 23 susmentionnés. De préférence, l'ouverture centrale 25 est agencée symétriquement autour du second axe 23 au niveau de la partie coronaire 21. De préférence, cette même ouverture centrale 25 est agencée symétriquement autour du premier axe 13 au niveau de la partie implantaire 11.

La surface extérieure de la partie coronaire 21 présente de plus une troncature 26, permettant le passage d'une telle vis de fixation sur un implant, notamment de sa tête, au niveau de la portion non rectiligne de l'embase de pilier. Pour cela, et selon la présente invention, cette troncature 26 est agencée du côté extérieur du virage à prendre par la vis, c'est-à-dire au niveau du côté ouvert 27 de l'angle de l'embase angulée, comme cela est particulièrement visible sur la figure 4, ce côté se situe au niveau de l'épaisseur la plus importante de la collerette 14 qui sépare les deux parties implantaire 11 et coronaire 21 de l'embase de pilier 10. La troncature 26 s'étend depuis l'extrémité de la partie coronaire 21, sur environ la moitié de la hauteur de la partie coronaire 21. Sa dimension est adaptée au passage de la tête d'une vis de fixation.

L'embase de pilier 10 est de préférence universelle, et présente une forme symétrique ou plus précisément quasi symétrique (l'ergot 24 forme par exemple une exception à la symétrie) autour des deux axes 13, 23 susmentionnés, qui forment des axes de révolution. L'embase de pilier 10 se présente avantageusement sous une forme monobloc, en une seule pièce. Elle est avantageusement dans un matériau métallique. Elle peut par exemple être en titane, ou en alliage de titane. De plus, la surface extérieure de la partie coronaire 21 peut être en tout ou partie sablée pour favoriser l'adhésion de la colle et la fixation d'une prothèse. Elle peut aussi être revêtue d'une couche de nitrure de titane, par exemple par un dépôt par un procédé PVD, pour lui donner un aspect jaune et éviter les zones sombres sous la gencive.

Il existe autant d'embases de pilier différentes que de dispositifs de connexion différents des implants existants, afin de pouvoir disposer, pour chaque implant existant, d'une embase de pilier dotée d'un dispositif de connexion 12 qui lui est adapté. L'avantage de cette approche est qu'elle permet de conserver toute la seconde partie coronaire 21 des embases de pilier 10, à partir de la collerette 14, inchangée, quel que soit l'implant correspondant à l'embase de pilier. Naturellement, il est aussi possible de prévoir des secondes parties coronaires 21 différentes pour des embases de pilier 10 différentes, selon leur utilisation envisagée. Dans tous les cas, la seconde partie coronaire 21 de l'embase de pilier est indépendante de l'implant, décorrélée du dispositif de fixation de l'implant. Elle conserve une forme standard, compatible à la réception d'une prothèse fabriquée avec les techniques existantes de fabrication de prothèse, par usinage de bloc par exemple. La collerette 14 peut présenter différentes hauteurs, de sorte à pouvoir s'adapter à différentes épaisseurs de gencives. Notamment, sa hauteur h la plus importante est avantageusement comprise entre 0,5 et 7mm inclus.

Nous entendons finalement par embase de pilier toute embase destinée à supporter une construction prothétique, par fixation sur au moins un implant, comme une prothèse, une armature, un capuchon de cicatrisation, une empreinte...

De plus, l'invention s'applique à toute prothèse dentaire, qui peut être une prothèse finale, comme une couronne ou un bridge, ou une prothèse temporaire. De plus, le terme de prothèse dentaire inclut aussi une prothèse incomplète, notamment une sous-partie intermédiaire comprenant un volume intérieur creux pour sa fixation sur une embase de pilier, parfois appelée chape.

La figure 5 représente un ensemble pour restauration dentaire, à partir d'un implant 1 intégré dans une partie osseuse 2. Une embase de pilier 10, telle que décrite ci-dessus, est fixée sur l'implant 1 par son dispositif de connexion 12, et par l'intermédiaire d'une vis, qui sera représentée sur les figures 8 et 9. La collerette 14 de l'embase de pilier 10 se trouve à la surface justogingivale et sa surface supérieure forme une surface de réception et de butée pour une prothèse 30. Cette dernière est fixée sur la partie coronaire 21 de l'embase de pilier 10. Dans cette construction, la partie coronaire 21 est orientée selon une direction (selon l'axe 23) sensiblement égale à celle de la prothèse 30, à plus ou moins 10 degrés. Cette géométrie permet une fixation idéale de la prothèse 30 sur l'embase de pilier 10. D'autre part, comme l'embase de pilier 10 est angulée, elle permet aussi sa fixation sur un implant orienté selon une direction différente (axe 13). La configuration finale permet ainsi de cumuler le premier avantage d'un positionnement de l'implant 1 dans la zone osseuse la plus favorable, quelle que soit l'orientation induite, tout en orientant la prothèse dans la direction idéale pour lui permettre d'atteindre le positionnement fonctionnel et l'aspect esthétique idéaux. Cette solution permet aussi de réaliser la cicatrisation gingivale idéale.

Le mode de réalisation a été décrit ci-dessus dans le cadre d'une embase de pilier 10 présentant une partie coronaire 21 sensiblement tronconique, et au moins partiellement cylindrique, sur laquelle est directement fixée une prothèse 30. Une telle approche présente l'avantage de la simplicité. Toutefois, l'invention ne se limite pas à une telle approche. Notamment, la figure 6 représente une variante de réalisation dans laquelle un capuchon de cicatrisation 29 est fixé sur la partie coronaire 21 de la même embase de pilier 10. Dans ce mode de réalisation, le capuchon de cicatrisation est clippé sur la partie coronaire 21, notamment par l'intermédiaire d'une gorge formant un élément de clippage 28, comme décrit précédemment. Ce capuchon de cicatrisation présente une forme anatomique, permettant de remplir une fonction de cicatrisation optimisée de la gencive, qui est conformée par la surface latérale extérieure du capuchon de cicatrisation 29. Cette conformation de la gencive correspond au mieux à la forme de la prothèse 30 et est aussi formée selon la bonne orientation, celle de la prothèse 30. Cette surface latérale du capuchon de cicatrisation 29 peut présenter une section sensiblement trapézoïdale ou rectangulaire dans un plan perpendiculaire à l'axe 23 de l'embase de pilier. L'ergot 24 permet la bonne orientation angulaire dudit capuchon de cicatrisation autour de l'axe 23 de la partie coronaire 21 de l'embase de pilier 10.

La figure 7 illustre le résultat qui serait obtenu si l'implant 1 du mode de réalisation était associé à un ensemble de restauration de l'état de la technique, tel qu'illustré en référence avec la figure 1, en remplacement de l'ensemble de restauration dentaire avec l'embase de pilier selon la présente invention.

Il apparait ici que le collage de la prothèse 30 sur l'embase de pilier 3 ne serait pas idéal, voire impossible, du fait de leur grande différence d'orientation, entre l'axe 7 de l'implant 1 et de l'embase de pilier 3 et l'axe 9 de la prothèse. D'autre part, le vissage de l'embase de pilier 3 sur l'implant 1 serait ici impossible, sauf à percer une ouverture 31 au travers la prothèse 30, par son côté vestibulaire visible, au niveau de son intersection avec l'axe 7, au détriment de l'aspect esthétique de la restauration dentaire.

La présente description décrit aussi un procédé de restauration dentaire utilisant une embase de pilier telle que décrite précédemment. Selon le mode de réalisation, ce procédé de restauration dentaire présente les étapes suivantes :
- Fixation d'une prothèse 30 sur une embase de pilier 10 angulée, telle que décrite précédemment ; puis
- Vissage en bouche de l'ensemble obtenu sur un implant 1 à l'aide d'une vis 35, par le passage d'un outil 40, notamment un tournevis, au travers une ouverture 31 de la prothèse 30 et une ouverture centrale 25 de l'embase de pilier 10, de sorte à atteindre la vis 35 logée dans l'ouverture centrale 25 de l'embase de pilier 10 et à permettre son vissage dans l'implant 1, l'ouverture 31 de la prothèse 30 étant positionnée sur une face linguale non visible.

La figure 8, sur laquelle la prothèse 30 est collée sur l'embase de pilier 10, illustre cette opération de vissage. Le dispositif de connexion 12 de l'embase de pilier 10 a été positionné en position de connexion avec le dispositif de connexion correspondant de l'implant 1. La partie active d'un outil 40, comme un tournevis rotulé, est intégré au sein d'une ouverture 31 de la prothèse 30 et au sein de l'ouverture centrale 25 de l'embase de pilier jusqu'à atteindre la tête d'une vis 35 positionnée dans l'ouverture centrale 25 de l'embase de pilier 10, pour procéder à son vissage au sein de l'implant 1, induisant la solidarisation simultanée de l'embase de pilier 10 et de la prothèse 30 sur l'implant 1, dans la position finale illustrée sur la figure 9 (dans laquelle la prothèse 30 n'est pas représentée). Dans cette position finale, la vis 35 sort donc partiellement de l'ouverture centrale 25 de l'embase de pilier, au-delà du dispositif de connexion 12, au sein de l'implant 1. De plus, la tête de la vis 35 vient en appui contre une butée adaptée au sein de l'ouverture centrale 25, lui empêchant de poursuivre sa progression et garantissant le maintien de l'ensemble de restauration.

En remarque, l'insertion de l'outil 40 au sein de l'embase de pilier 10, est faite selon la direction de l'axe 23 de la partie coronaire 21 de l'embase de pilier 10. Cette insertion, par une ouverture 31 de la prothèse 30, superposée à l'ouverture centrale 25 de l'embase de pilier 10, dans ladite direction 23, présente l'avantage esthétique que cette ouverture 31 se trouve positionnée du côté lingual en bouche, donc du côté non visible. En fin de vissage, l'ouverture 31 de la prothèse 30 est bouchée avec un composite dentaire ; cette zone n'étant pas visible depuis l'extérieur de la bouche, elle n'a pas d'effet négatif sur l'aspect esthétique de la restauration dentaire. La partie visible de la prothèse 30, du côté vestibulaire, reste intacte.

En remarque, la vis 35 de fixation est insérée au préalable dans l'ouverture centrale 25 de l'embase de pilier 10. Cette vis est conduite jusqu'en position finale, en prise avec une partie filetée au sein de l'implant 1. En remarque, lors du passage de la vis 35 au centre de l'embase de pilier au niveau de la portion non rectiligne, par exemple un coude, formé par le fait que l'embase de pilier est angulée, sa tête se déporte légèrement au travers la troncature 26, qui autorise ainsi son désaxage et son passage au-delà de cette portion non rectiligne. Autrement dit, la troncature 26 permet d'éviter que la tête de la vis 35 vienne en butée contre la surface intérieure de l'ouverture centrale 25 de l'embase de pilier, empêchant sa progression selon une direction non rectiligne dans une ouverture de diamètre minimal, du fait des petites dimensions d'une embase de pilier. Cette troncature 26 permet ainsi l'orientation finale de la vis 35 selon l'axe 13 de la partie implantaire 11 de l'embase de pilier 10.

En remarque, cette insertion de la vis 35 peut se faire avant le collage de la prothèse 30 sur l'embase de pilier, auquel cas son introduction au sein de l'embase de pilier est facilitée par la troncature 26 augmentant la dimension de l'entrée dans l'ouverture centrale 25. En variante, cette insertion de la vis 35 peut se faire après le collage de la prothèse, auquel cas son introduction au sein de l'embase de pilier 10 est faite selon la direction de l'axe 23 de la partie coronaire 21 de l'embase de pilier 10. Cette insertion est réalisée par l'ouverture 31 de la prothèse 30, superposée à l'ouverture centrale 25 de l'embase de pilier 10.

Selon le mode de réalisation de l'invention, l'ouverture centrale 25 comprend un taraudage au niveau de la partie implantaire 11, et la vis 35 présente une surface filetée sous la tête de vis, adaptée à une coopération avec ce taraudage. Ainsi, lors de l'insertion de la vis 35 dans l'ouverture centrale 25, lorsque la vis 35 atteint sa position orientée selon l'axe 13 de la partie implantaire 11, elle doit être vissée dans le taraudage susmentionné pour poursuivre sa course. Cette caractéristique lui permet d'occuper une position temporaire stable au sein de l'ouverture centrale 25 de l'embase de pilier, qui remplit ainsi une fonction d'imperdable. Cette caractéristique procure le gros avantage de permettre d'amener l'embase de pilier 10 en bouche, avec ou sans la prothèse, avec la vis déjà insérée en son sein, sans risque de la perdre en bouche.

Le procédé de restauration dentaire peut être combiné aux étapes complémentaires suivantes d'un procédé de fabrication d'un ensemble pour restauration dentaire.

D'abord, un praticien peut prendre une empreinte numérique de la bouche du patient. Les données de numérisation, obtenues par tout appareil comme un scanner buccal par exemple, sont transmises automatiquement à un ordinateur doté d'un logiciel de restauration dentaire. A partir des données de numérisation, un logiciel détermine automatiquement la zone osseuse la plus favorable au niveau de la restauration dentaire à réaliser, pour y positionner le ou les implants adaptés de la manière la plus optimale possible.

Le même logiciel détermine de même la forme, la position, l'orientation de la ou des prothèses à réaliser. Il détermine ensuite la ou les embases de pilier nécessaires, en construisant au moins une embase de pilier angulée, d'angle adapté en fonction de la différence d'orientation d'un certain implant et de la prothèse superposée. Il engage alors la fabrication automatique de l'embase de pilier angulée prédéfinie, telle que décrite précédemment.

En remarque, ce procédé de fabrication d'un ensemble pour restauration dentaire peut se faire totalement numériquement, donc selon une première phase virtuelle, ou comprendre des phases de construction d'une maquette en plastique ou plâtre. Dans ce dernier cas, une empreinte physique, par exemple en silicone, peut être réalisée, un plâtre peut être coulé dans l'empreinte pour créer le maître modèle, c'est à dire une réplique de l'arcade dentaire à restaurer, qui est ensuite scannée en laboratoire pour reconstruire une image numérique.

Comme cela ressort de la description ci-dessus, la dernière phase du procédé de restauration repose donc sur un dispositif de restauration, qui comprend une unité centrale de traitement et de commande, comprenant ici au moins un microprocesseur, lié à une mémoire électronique, sur lequel est exécuté un logiciel permettant la mise en œuvre de tout ou partie des étapes du procédé de fabrication d'un ensemble pour restauration dentaire décrit ci-dessus. Cette unité centrale est liée par un dispositif de communication à un module d'obtention de données numériques représentant tout ou partie d'une dentition d'un patient, qui peut consister en un appareil comme un scanner buccal. Elle est aussi liée à une interface homme machine, comprenant par exemple un écran et/ou un clavier, pour permettre les échanges avec un opérateur. L'unité centrale réalise ensuite tous les traitements nécessaires, calculs et autres, par un moyen logiciel. Elle est enfin apte à générer et transmettre des commandes de fabrication à un dispositif de fabrication, comme une machine outil, d'une embase de pilier, d'un éventuel capuchon de cicatrisation et d'une prothèse associée.

L'invention permet donc bien de cumuler les avantages recherchés, en permettant un collage d'une prothèse sur une embase de pilier hors de la bouche d'un patient, la mise en œuvre d'une restauration dentaire dans laquelle un implant est orienté en fonction de la structure osseuse présente au niveau de la restauration, et non en fonction de l'orientation finale de la prothèse, et dans laquelle la prothèse présente un aspect esthétique final optimisé.

## Revendications

1. Embase de pilier (10) comprenant une partie implantaire (11) orientée autour d'un premier axe (13), adaptée à une fixation sur un implant dentaire, et une partie coronaire (21) orientée autour d'un second axe (23), adaptée pour la fixation d'une prothèse dentaire, et une collerette (14) séparant lesdites partie implantaire (11) et partie coronaire (21), les deux axes (13, 23) respectivement de la partie implantaire (11) et de la partie coronaire (21) n'étant pas alignés et formant un angle de l'embase angulée, l'embase de pilier (10) comprenant une ouverture centrale (25) s'étendant sur toute sa longueur, adaptée pour le passage d'un outil comme un tournevis, dont l'entrée est sensiblement orientée dans la direction du second axe (23) au niveau d'une extrémité de la partie coronaire (21) et la sortie partielle sensiblement orientée dans la direction du premier axe (13) au niveau de la partie implantaire (11), pour un vissage dans un implant, l'embase de pilier (10) comprenant une troncature (26) pratiquée dans la paroi de la partie coronaire (21), pour permettre le passage d'une vis au niveau d'une portion non rectiligne de l'ouverture centrale (25) de l'embase de pilier (10), la troncature (26) augmentant la dimension de l'entrée dans l'ouverture centrale (25) ou la troncature (26) s'étendant depuis l'extrémité de la partie coronaire (21) sur environ la moitié de la hauteur de la partie coronaire (21), cette troncature (26) étant agencée au niveau du côté ouvert (27) de l'angle de l'embase angulée, **caractérisé en ce que** ce côté ouvert se situe au niveau de l'épaisseur la plus importante de ladite collerette (14).

2. Embase de pilier (10) selon la revendication précédente, **caractérisée en ce que** l'ouverture centrale (25) comprend un taraudage au niveau de la partie implantaire (11), adaptée pour le maintien temporaire stable d'une vis au sein de l'ouverture centrale (25), remplissant ainsi une fonction d'imperdable.

3. Embase de pilier (10) selon la revendication 1 ou 2, **caractérisée en ce qu'**elle comprend un élément de guidage et de maintien en position, de type ergot (24), agencé sur la surface extérieure de la partie coronaire (21).

4. Embase de pilier (10) selon l'une des revendications précédentes, **caractérisée en ce qu'**elle comprend un élément de clippage (28), comme une gorge, agencé sur la surface extérieure de la partie coronaire (21), pour le clippage d'un capuchon de cicatrisation (29).

5. Embase de pilier (10) selon l'une des revendications précédentes, **caractérisée en ce qu'**elle comprend au moins une gorge (22) de rétention de colle sur la surface extérieure de la partie coronaire (21).

6. Embase de pilier (10) selon l'une des revendications précédentes, **caractérisée en ce que** la partie coronaire (21) présente au moins une partie de forme tronconique et/ou cylindrique agencée autour du second axe (23).

7. Embase de pilier (10) selon l'une des revendications précédentes, **caractérisée en ce que** l'angle α formé entre les deux axes (13, 23) respectivement de la partie implantaire (11) et de la partie coronaire (21) est compris entre 5 et 30 degrés.

8. Embase de pilier (10) selon l'une des revendications précédentes, **caractérisée en ce que** l'ouverture centrale (25) est sensiblement symétriquement agencée autour du second axe (23) de la partie coronaire (21), au moins au niveau de l'extrémité de la partie coronaire (21), et sensiblement symétriquement agencée autour du premier axe (13) de la partie implantaire (11) au niveau d'un dispositif de connexion (12) avec un implant, agencé à l'extrémité de la partie implantaire (11) de l'embase de pilier (10).

9. Embase de pilier (10) selon l'une des revendications précédentes, **caractérisée en ce qu'**elle se présente sous une forme monobloc.

10. Ensemble de restauration comprenant une prothèse (30), éventuellement un capuchon de cicatrisation (29), fixée sur une embase de pilier (10) selon l'une des revendications précédentes.

## Patentansprüche

1. Abutmentaufsatz (10), umfassend einen Implantatteil (11), der um eine erste Achse (13) ausgerichtet und für eine Fixierung an einem Zahnimplantat ausgeführt ist, und einen Kronenteil (21), der um eine zweite Achse (23) ausgerichtet und für die Fixierung einer Zahnprothese ausgeführt ist, sowie einen Bund (14), der den Implantatteil (11) und den Kronenteil (21) voneinander trennt, wobei die beiden Achsen (13, 23) jeweils des Implantatteils (11) und des Kronenteils (21) nicht aufeinander ausgerichtet sind und einen Winkel des eckigen Aufsatzes bilden, wobei der Abutmentaufsatz (10) eine mittlere Öffnung (25) umfasst, die sich über gesamte Länge davon erstreckt und für das Hindurchgehen eines Werkzeugs wie eines Schraubendrehers ausgeführt ist, wobei deren Eingang auf der Höhe eines Endes des Kronenteils (21) im Wesentlichen in der Richtung der zweiten Achse (23) ausgerichtet ist und der partielle Ausgang auf der Höhe des Implantatteils (11) für ein Verschrauben in ein Implantat im Wesentlichen in der Richtung der ersten Achse (13) ausgerichtet ist, wobei der Abutmentaufsatz (10) eine in der Wand des Kronenteils (21) ausgeführte Verkürzung (26) umfasst, um das Hindurchgehen einer Schraube auf der Höhe eines nicht geradlinigen Abschnitts der mittleren Öffnung (25) des Abutmentaufsatzes (10) zu gestatten, wobei die Verkürzung (26) die Abmessung des Eingangs in die mittlere Öffnung (25) vergrößert oder wobei sich die Verkürzung (26) von dem Ende des Kronenteils (21) über ungefähr die halbe Höhe des Kronenteils (21) erstreckt, wobei diese Verkürzung (26) auf der Höhe der offenen Seite (27) des Winkels des eckigen Aufsatzes angeordnet ist, **dadurch gekennzeichnet, dass** sich diese offene Seite auf der Höhe der größten Dicke des Bunds (14) befindet.

2. Abutmentaufsatz (10) nach dem vorhergehenden Anspruch, **dadurch gekennzeichnet, dass** die mittlere Öffnung (25) auf der Höhe des Implantatteils (11) ein Innengewinde umfasst, das für das vorübergehende stabile Halten einer Schraube innerhalb der mittleren Öffnung (25) ausgeführt ist und somit eine Unverlierbarkeitsfunktion erfüllt.

3. Abutmentaufsatz (10) nach Anspruch 1 oder 2, **dadurch gekennzeichnet, dass** er ein Führungs- und Positionshalteelement nach Art einer Nase (24) umfasst, das an der Außenfläche des Kronenteils (21) angeordnet ist.

4. Abutmentaufsatz (10) nach einem der vorhergehenden Ansprüche, **dadurch gekennzeichnet, dass** er zum Einrasten einer Heilungskappe (29) ein an der Außenfläche des Kronenteils (21) angeordnetes Einrastelement (28) wie eine Auskehlung umfasst.

5. Abutmentaufsatz (10) nach einem der vorhergehenden Ansprüche, **dadurch gekennzeichnet, dass** er mindestens eine Auskehlung (22) zum Halten von Klebstoff an der Außenfläche des Kronenteils (21) umfasst.

6. Abutmentaufsatz (10) nach einem der vorhergehenden Ansprüche, **dadurch gekennzeichnet, dass** der Kronenteil (21) mindestens einen kegelstumpfförmigen und/oder zylindrischen Teil aufweist, der um die zweite Achse (23) angeordnet ist.

7. Abutmentaufsatz (10) nach einem der vorhergehenden Ansprüche, **dadurch gekennzeichnet, dass** der zwischen den beiden Achsen (13, 23) jeweils des Implantatteils (11) und des Kronenteils (21) gebildete Winkel α zwischen 5 und 30 Grad beträgt.

8. Abutmentaufsatz (10) nach einem der vorhergehenden Ansprüche, **dadurch gekennzeichnet, dass** die mittlere Öffnung (25) mindestens auf der Höhe des Endes des Kronenteils (21) im Wesentlichen symmetrisch um die zweite Achse (23) des Kronenteils (21) angeordnet ist und auf der Höhe einer Vorrichtung (12) zur Verbindung mit einem Implantat, die an dem Ende des Implantatteils (11) des Abutmentaufsatzes (10) angeordnet ist, im Wesentlichen symmetrisch um die erste Achse (13) des Implantatteils (11) angeordnet ist.

9. Abutmentaufsatz (10) nach einem der vorhergehenden Ansprüche, **dadurch gekennzeichnet, dass** er in einstückiger Form vorliegt.

10. Zahnversorgungsanordnung, umfassend eine Prothese (30), eventuell eine Heilungskappe (29), die auf einem Abutmentaufsatz (10) nach einem der vorhergehenden Ansprüche fixiert ist.

## Claims

1. Abutment base (10) comprising an implant part (11) oriented about a first axis (13), suitable for fixing to a dental implant, and a crown part (21) oriented about a second axis (23), suitable for fixing a dental prosthesis, and a collar (14) separating said implant part (11) and said crown part (21), which two axes (13, 23), respectively of the implant part (11) and of the crown part (21), are not aligned and form an angle of the angled base, the abutment base (10) comprising a central opening (25) extending over the entire length thereof, suitable for the passage of a tool such as a screwdriver, the inlet of which opening is substantially oriented in the direction of the second axis (23) at one end of the crown part (21), and the partial outlet of which opening is substantially oriented in the direction of the first axis (13) at the implant part (11), for screwing into an implant, the abutment base (10) comprising a truncation (26) made in the wall of the crown part (21), to allow the passage of a screw at the level of a non-rectilinear portion of the central opening (25) of the abutment base (10), the truncation (26) increasing the size of the inlet of the central opening (25), or the truncation (26) extending from the end of the crown part (21) over about half the height of the crown part (21), this truncation (26) being arranged at the open side (27) of the angle of the angled base, **characterized in that** this open side is situated at the level of the greatest thickness of said collar (14).

2. Abutment base (10) according to the preceding claim, **characterized in that** the central opening (25) comprises an internal thread at the level of the implant part (11), suitable for temporarily keeping a screw stable within the central opening (25), thereby fulfilling a captive securing function.

3. Abutment base (10) according to Claim 1 or 2, **characterized in that** it comprises a guiding and position-holding element, of the lug type (24), arranged on the outer surface of the crown part (21) .

4. Abutment base (10) according to one of the preceding claims, **characterized in that** it comprises a clip element (28), like a groove, arranged on the outer surface of the crown part (21), for the clipping-on of a healing cap (29).

5. Abutment base (10) according to one of the preceding claims, **characterized in that** it comprises at least one groove (22) for retaining glue on the outer surface of the crown part (21).

6. Abutment base (10) according to one of the preceding claims, **characterized in that** the crown part (21) has at least one part of frustoconical and/or cylindrical shape arranged about the second axis (23) .

7. Abutment base (10) according to one of the preceding claims, **characterized in that** the angle α formed between the two axes (13, 23), respectively of the implant part (11) and of the crown part (21), is between 5 and 30 degrees.

8. Abutment base (10) according to one of the preceding claims, **characterized in that** the central opening (25) is substantially symmetrically arranged about the second axis (23) of the crown part (21), at least at the end of the crown part (21), and substantially symmetrically arranged about the first axis (13) of the implant part (11) at the level of a device (12) for connection to an implant, arranged at the end of the implant part (11) of the abutment base (10).

9. Abutment base (10) according to one of the preceding claims, **characterized in that** it is in one piece.

10. Restoration assembly comprising a prosthesis (30), optionally a healing cap (29), fixed to an abutment base (10) according to one of the preceding claims.
